# EUROPÄISCHE PATENTSCHRIFT

(11) **EP 0 460 404 B1**
(45) Veröffentlichungstag und Bekanntmachung des Hinweises auf die Patenterteilung: **12.03.1997**
(21) Anmeldenummer: 91107204.9
(22) Anmeldetag: 03.05.1991
(51) Int. Cl.: H04Q 3/62, H04M 11/00, H04Q 3/545, H04M 3/42

(54) **Verfahren zur Datenübertragung in Kommunikations-Vermittlungsanlagen**
Method for data transmission in communication exchanges
Procédé pour la transmission de signaux de données dans des centraux de télécommunication

(30) Priorität: 08.06.1990 DE 4018382
(43) Veröffentlichungstag der Anmeldung: 11.12.1991
(73) Patentinhaber: ROBERT BOSCH GMBH, 70442 Stuttgart (DE)
(72) Erfinder: Scheerer, Ulrich, W-6110 Dieburg (DE); Herger, Gerhard, W-6238 Hofheim (DE); Gleisenberger, Jutta, W-6360 Friedberg (DE)

(56) Entgegenhaltungen:
- EP-A- 0 460 403
- EP-A- 0 460 405
- DE-A- 3 405 011
- DE-A- 3 416 826
- DE-A- 3 542 969
- GB-A- 1 158 339
- INTERNATIONAL SWITCHING SYMPOSIUM - PAPER A11.6 Bd. 4, März 1987, PHOENIX (US) Seiten 875 - 879; LYHNE ET AL: 'ISDN - A Basis for Enhanced and New Services for the Next Decades'
- IEEE GLOBAL TELECOMMUNICATIONS CONFERENCE - PAPER 40.2 Bd. 3, Dezember 1986, HOUSTON (US) Seiten 1416 - 1423; NEWELL ET AL: 'Business Applications of ISDN'

## Beschreibung

Die Erfindung betrifft ein Verfahren zur Datenübertragung in Kommunikations-Vermittlungsanlagen.

In den TN-Nachrichten 1971, Heft 72 ist ab Seite 5 ein Aufsatz abgedruckt mit dem Titel: "Datenverkehr in Fernsprech-Nebenstellenanlagen". Es wird dort aufgezeigt, auf welche Weise eine Fernsprech-Nebenstellenanlage Verbindungswege zur Verfügung stellt, um ein als Eingabemedium benutztes Fernsprechendgerät mit einer Dateneinrichtung zu verbinden. Dem damaligen Stand der Technik entsprechend werden räumlich durchschaltende Koppelfelder oder Schrittschaltwähler-Anordnungen dazu benutzt, um einen eigentlich für Sprachübertragung vorgesehenen Verbindungsweg auch für den Datenverkehr zu benutzen. Dabei erfolgt der Verbindungsaufbau in der gleichen Weise, wie er auch für das Fernsprechen vorgesehen ist. Wenn eine Verbindung für Datenübertragungen zustandegekommen ist, so muß dieser "Sprechweg" für die gesamte Dauer der Datenverbindung zur Verfügung stehen. Dieser Sprechweg muß zusätzlich noch modifiziert, daß heißt galvanisch durchgeschaltet werden, wenn eine gleichstrommäßige Datenübertragung erfolgen soll. In dem Aufsatz ist beschrieben (Seite 7, rechte Spalte), auf welche Weise eine Dateneingabe über den Nummernschalter eines Fernsprech-Endgerätes erfolgen kann.

Obwohl bei einer Datenverbindung zwischen den einzelnen Dateneingaben und -ausgaben Pausen entstehen, muß der Verbindungsweg permanent durchgeschaltet bleiben, wie dies beim Fernsprechen üblich ist. Wenn also eine Fernsprech-Nebenstellenanlage mit Datenverkehr ausgestattet ist, so entsteht dafür ein erheblicher Mehrbedarf an Verbindungswegen. Außerdem ist es erforderlich, die Eingabegeräte und die Ausgabegeräte aneinander anzupassen, weil diese über einen Verbindungsweg direkt miteinander verbunden sind. Wenn also neben der Dateneingabe mit Nummernschalter auch andere Arten von Dateneingaben, beispielsweise Tastwahl, vorgesehen ist, so müssen bei den Datenendgeräten geeignete Empfänger vorhanden sein, und die Programme für die Datenverarbeitung müssen entsprechend auf jedes Eingabeverfahren angepaßt werden.

Unter dem Titel "Fernsprechen und Datenverkehr - Ein gemeinsames Kommunikationssystem" ist in den TN-Nachrichten 1984, Heft 85 ab Seite 16 beschrieben, welche verschiedenen Möglichkeiten des Datenverkehrs in Fernsprech-Nebenstellenanlagen bestehen. Hier wird wegen der größeren Geschwindigkeit und den mehr als 10 verschiedenen Eingabemöglichkeiten ein Fernsprech-Apparat mit Tastwahl bevorzugt. Da aber derartige Dateneingaben nur mit sehr geringer Geschwindigkeit betrieben werden können, ist auch der Einsatz von Modems beschrieben, womit höhere Geschwindigkeiten erreicht werden.

Auch bei den in diesem Aufsatz beschriebenen Verfahren wird davon ausgegangen, daß die Fernsprech-Nebenstellenanlage für den Datenverkehr Verbindungswege zur Verfügung stellt, wie sie für die Übertragung von Sprache benutzt werden. Bei der Verwendung von Modems werden deshalb die eingegebenen Zeichen in Frequenzen umgesetzt, die innerhalb der Bandbreite des Fernsprechkanals, also zwischen 300 und 3400 Hz liegen. Beim einem derartigen Konzept müssen, wie bereits zuvor beschrieben worden ist, die Fernsprech-Nebenstellenanlagen für den Datenverkehr eine erhebliche Mehrleistung an Sprechwegen aufbringen. Da auch hier eine direkte Verbindung zwischen zur Eingabe benutzten Geräten und den Datenendeinrichtungen besteht, muß bei jeder Datenendeinrichtung die Verschiedenartigkeit von Eingaben berücksichtigt werden.

Aus der DE-A-34 16 826 ist ein Verfahren zur Datenübertragung in Kommunikations-Vermittlungsanlagen bekannt, wobei analog betriebene Endgeräte zur Dateneingabe benutzt werden, welche bei Abgabe von entsprechender Wahlinformation über die Vermittlungsanlage mit einer Datenendeinrichtung in Verbindung treten können, wobei ein Datentausch in beiden Richtungen stattfinden kann. Es sind dort dezentrale und zentrale Steuereinrichtungen vorgesehen. Die von einem analogen Endgerät abgegebenen und von einer zuständigen dezentralen Steuerung aufgenommenen Informationen werden über ein bestehendes Busleitungssystem im Rahmen eines dafür gebildeten Sprachkanals zu einer zentral angeordneten, für bestimmte Aufgaben vorgesehenen Verarbeitungseinrichtung geleitet, wobei ein besonderer Verbindungszustand entsteht. Die Verarbeitungseinrichtung überprüft die von dem analogen Endgerät kommenden Daten und gibt sie nur dann an eine Datenendeinrichtung weiter, wenn sie dort einwandfrei verarbeitet werden können, wobei über das Bussystem ein weiterführender Sprachkanal zu der Datenendeinrichtung gebildet wird.

Aus International Switching Symposium, A11.6, Bd.4, März 1987, Phoenix, USA, Seiten 875 - 879; P. Lyhne et al. ist es bekannt, den Signalisierungskanal im ISDN (D-Kanal) auch zur Übertragung von Daten zu verwenden und im ISDN vermittlungstechnisch zu schalten.

Die Aufgabe der Erfindung besteht darin, ein Verfahren anzugeben, womit für Datenverbindungen in Kommunikations-Vermittlungsanlagen das Benutzen von Sprechwegen weitgehend vermieden wird, wenn Wählorgane einfacher Fernsprech-Endgeräte für die Dateneingabe benutzt werden, ohne daß ein großer Zusatzaufwand nötig ist. Außerdem sollen den Datenendeinrichtungen einheitliche Eingabeformate angeboten werden können, unabhängig von der Beschaffenheit der Eingabeorgane (Nummernschalter, Tastatur) einfacher Fernsprech-Endgeräte.

Zur Lösung dieser Aufgabe ist eine Merkmalskombination vorgesehen, wie sie im Patentanspruch 1 angegeben ist.

Damit wird in vorteilhafter Weise erreicht, daß für die Herstellung einer Verbindung zwischen einem zur Eingabe von Daten benutzten Fernsprech-Endgerät und einer Datenendeinrichtung kein Sprechweg zur Verfügung gestellt werden muß. Die in den dezentralen Steuereinrichtungen, welche für jeweils eine Gruppe von Anschlüssen zuständig sind, ohnehin vorhandenen Wahlempfangseinrichtungen können ohne Mehraufwand für das Empfangen der von den Teilnehmer-Endgeräten aus abgegebenen Informationen benutzt werden. Es besteht dann lediglich eine Verbindung über die Signalisierungswege, welche bei jeder einzelnen Dateneingabe kurzzeitig aktiviert wird. Außerdem wird durch die Verarbeitungseinrichtung erreicht, daß an die Datenendeinrichtungen einheitliche Datenformate abgegeben werden, und zwar unabhängig von der Art des jeweils zur Dateneingabe benutzten Fernsprech-Endgerätes.

In den Unteransprüchen sind vorteilhafte Weiterbildungen der Erfindung angegeben.

Ein Ausführungsbeispiel der Erfindung wird nachfolgend anhand einer Zeichnung näher erläutert.

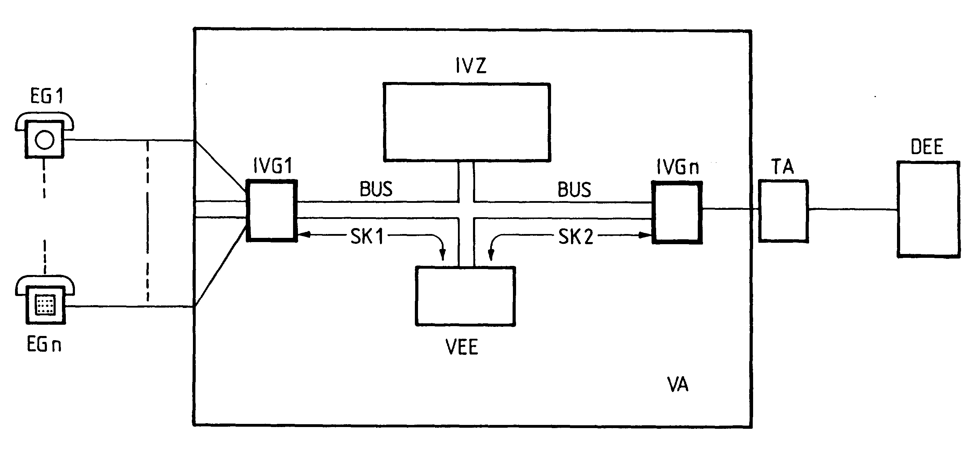

In der Zeichnung ist das Schema einer Vermittlungsanlage VA dargestellt, woran mindestens eine Gruppe von Fernsprech-Endgeräten EG1 bis EGn angeschlossen ist. Diese Endgeräte arbeiten über ihre nicht dargestellten Anschlußschaltungen unmittelbar mit einer für die betreffende Anschlußorgangruppe zuständigen dezentralen Steuerung IGV1 zusammen. Diese dezentrale Steuerung IGV1 ist über ein Busleitungssystem BUS mit anderen dezentralen Steuerungen, z. B. IVGn und mit einer zentralen Steuerung IVZ verbunden. An dieses Busleitungssystem ist außerdem eine Verarbeitungseinrichtung VEE angeschlossen, welche für den Datenverkehr zuständig ist.

Außerdem ist an die Vermittlungsanlage eine Datenendeinrichtung DEE angeschlossen, welche wie ein Anschlußorgan behandelt wird. Die dafür vorgesehene Teilnehmeranschlußschaltung TA kann eine besondere Übertragungsschnittstelle, z. B. V24 enthalten, um die Datenendeinrichtung DEE über größere Entfernungen zu betreiben. Es sei angenommen, daß für das Teilnehmeranschlußorgan TA, woran eine Datenendeinrichtung DEE angeschlossen ist, eine dezentrale Steuerung IVGn zuständig ist.

Wenn nun von einem analogen Endgerät EG1 aus, wobei es sich beispielsweise um einen Fernsprech-Apparat mit Nummernschalter handeln kann, eine Datenverbindung aufgebaut werden soll, so wird von dort aus die dazu notwendige Kennziffer gewählt. Diese Kennziffer wird zunächst wie jede andere Wahlinformation auch von der dezentralen Steuerung IVG1 aufgenommen und ausgewertet. Die dezentrale Steuerung IVG1 erkennt also an der gewählten Ziffer, daß es sich um eine Datenverbindung handeln soll. Daraufhin wird über das Busleitungssystem BUS die Verarbeitungseinrichtung VEE aktiviert. Dabei wird ein Signalisierungskanal SK1 gebildet, worin mit einem vorbestimmten Protokoll die gewählte Ziffer von der dezentralen Steuerung IVG1 zur Verarbeitungseinrichtung VEE übertragen wird. Außerdem wird die Rufnummer oder Adresse des anrufenden Endgerätes EG1 zur Verarbeitungseinrichtung VEE gesendet. Damit ist sowohl in der dezentralen Steuerung IVG1 und in der Verarbeitungseinrichtung VEE bekannt, daß eine Datenverbindung besteht, welche von dem analogen Endgerät EG ausgeht. Da bei einem Fernsprech-Apparat mit Nummernschalter nur Ziffern eingegeben werden können, welche einzelnen abgesendet werden, wird jedesmal beim Ende einer Impulsserie die betreffende Ziffer von der dezentralen Steuerung IVG1 aufgenommen und direkt zur Verarbeitungseinrichtung VEE gesendet. Dieser Vorgang wiederholt sich mehrmals solange, bis die Verarbeitungseinrichtung erkannt hat, daß ein Eingabedatensatz vollständig ist. Dies hängt unter anderem von der zuerst gewählten Ziffer ab, womit das über die Datenverbindung zu bewirkende Merkmal charakterisiert wird.

Wenn die Verarbeitungseinrichtung VEE erkannt hat, daß ein Datensatz vollständig ist, so wird über das bereits erwähnte Busleitungssystem BUS ein innerhalb der Verarbeitungseinrichtung VEE erzeugter Ausgabedatensatz zu der für die vorbestimmte Datenendeinrichtung DEE zuständigen dezentralen Steuerung IVGn gesendet. Darin ist auch die Adresse des Anschlußorgans TA der Datenendeinrichtung DEE enthalten. Auf dem Busleitungssystem wird dafür ein weiterer Signalisierungskanal SK2 gebildet, welcher auch für weitere Dateneingaben benutzt wird.

Weitere Dateneingaben gelangen jeweils ziffernweise von dem anrufenden analogen Endgerät EG1 zur Verarbeitungseinrichtung VEE. Dort werden jeweils so viele einzelne Ziffern gesammelt und zwischengespeichert, wie für einen kompletten Datenausgabesatz benötigt werden. Ein solcher Ausgabedatensatz wird merkmalsbezogen erzeugt und immer dann zur Datenendeinrichtung DEE gesendet, wenn er vollständig ist.

Falls zur Dateneingabe ein analoges Endgerät EGn benutzt wird, welches eine Wähltastatur enthält, so wird grundsätzlich in gleicher Weise vorgegangen. Für das mit der Wähltastatur erzeugte Wahlkennzeichen, z. B. nach dem Mehrfrequenz-Verfahren, muß ohnehin in der dezentralen Steuerung IVG1 ein entsprechender Empfänger vorhanden sein. Diese Kennzeichen werden wie Wahlinformationen aufgenommen, wobei der Vorteil besteht, daß über die 10 Ziffern hinaus weitere 6 davon unabhängige Kennzeichen abgegeben werden können. Für die Übertragung der Eingabedaten von der dezentralen Steuerung IVG1 zur Verarbeitungseinrichtung VEE bestehen innerhalb des dafür gebildeten Signalisierungskanals SK1 keine Unterschiede gegenüber dem Verfahren, welches für analoge Endgeräte, z. B. EG1 mit Nummernschalterwahl angewendet wird. Auch die Weitergabe der Daten zur Datenendeinrichtung DEE über den Signalisierungskanal SK2 findet in gleicher Weise statt. Um den Benutzer von analogen Endgeräten EG1 bis EGn darüber zu informieren, ob eine Datenübertragung stattgefunden hat, kann von der Verarbeitungseinrichtung VEE veranlaßt werden, daß Quittungstöne gesendet werden. Der Benutzer kann auch dazu aufgefordert werden, seine Dateneingabe zu ergänzen oder zu wiederholen, wenn Unvollständigkeiten oder Unzulänglichkeiten innerhalb der Verarbeitungseinrichtung VEE festgestellt werden. Für Mitteilungen an den Benutzer eines zur Dateneingabe verwendeten analogen Endgerätes EG1 bis EGn werden Verbindungswege in nicht dargestellter Weise zwischen einem Tongenerator und/oder einer Sprach - ansageeinrichtung kurzzeitig hergestellt. Der Aufbau solcher Verbindungen wird von der Verarbeitungseinrichtung VEE veranlaßt. Solche Verbindungen können sich ebenfalls dann als notwendig erweisen, wenn von der Datenendeinrichtung DEE ausgehend Informationen rückwärts zu dem anrufenden analogen Endgerät EG1 bis EGn übertragen werden sollen. Die dafür notwendigen Informationen gelangen vom Datenendgerät DEE aus zunächst über das Teilnehmeranschlußorgan TA und die zuständige dezentrale Steuereinrichtung IVGn und über den bereits beschriebenen Signalisierungskanal SK2 zur Verarbeitungseinrichtung VEE. Die Verarbeitungseinrichtung VEE veranlaßt daraufhin, daß eine Verbindung zwischen einem Ansagegerät und dem anrufenden analogen Endgerät, z. B. EG1 aufgebaut wird. Die für eine Ansage notwendigen Daten werden auf gleichem Wege über die Verarbeitungseinrichtung VEE dem Ansagegerät mitgeteilt. Die für Hinweise und Ansage notwendigen Verbindungen innerhalb des in der Vermittlungsanlage VA vorhandenen Sprechwegenetzes werden nur kurzzeitig benötigt und müssen nicht für die gesamte Dauer einer Datenverbindung bereitgestellt werden. Auf diese Weise kann je nach Merkmal, welches mit der Dateneingabe bewirkt wird, auch ein Dialog mit dem Benutzer entstehen.

In den Signalisierungskanälen SK1 und SK2 können Übertragungsprotokolle benutzt werden, wie sie für das Dienste integrierende Digitalnetz ISDN verwendet werden.

## Patentansprüche

1. Verfahren zur Datenübertragung in Kommunikations-Vermittlungsanlagen, wobei analog betriebene Endgeräte zur Dateneingabe benutzt werden, welche bei Abgabe von entsprechender Wahlinformation über die Vermittlungsanlage mit einer Datenendeinrichtung in Verbindung treten können, wobei ein Datenaustausch in beiden Richtungen stattfinden kann, und wobei dezentrale und zentrale Steuereinrichtungen vorgesehen sind, mit folgenden Schritten:
- die von einem analogen Endgerät (EG) abgegebenen und von einer zuständigen dezentralen Steuerung (IVG1) aufgenommenen Informationen werden über ein bestehendes Busleitungssystem (BUS) im Rahmen eines dafür gebildeten Signalisierungskanals (SK1) zu einer zentral angeordneten, für bestimmte Aufgaben vorgesehenen Verarbeitungseinrichtung (VEE) geleitet, wobei ein besonderer Verbindungszustand entsteht,
- die Verarbeitungseinrichtung (VEE) überprüft die von dem analogen Endgerät (EG) kommenden Daten und gibt diese Daten nur dann an eine Datenendeinrichtung (DEE) weiter, wenn ein von dem analogen Endgerät (EG) kommender Datensatz als vollständig erkannt wurde,
- es wird ein weiterführender Signalisierungskanal (SK2) zu einer Datenendeinrichtung (DEE) gebildet über eine für die Datenendeinrichtung zuständige dezentrale Steuerung (IVGn) und eine Teilnehmeranschlußschaltung (TA),
- von der Verarbeitungseinrichtung (VEE) wird an das analoge Endgerät (EG) eine Information darüber abgegeben, ob die Datenübertragung ordnungsgemäß stattgefunden hat oder nicht.

2. Verfahren nach Anspruch 1,
dadurch gekennzeichnet,
daß von der Verarbeitungseinrichtung (VEE) eine Verbindung zur Übertragung von Sprach- und/oder Tonsignalen zu einem analogen Endgerät (EG) aufgebaut wird, da diese keine Empfangs- und Anzeigeeinrichtungen zur Darstellung digitaler Information enthält.

3. Verfahren nach Anspruch 1,
dadurch gekennzeichnet,
daß die Verarbeitungseinrichtung (VEE) innerhalb der Vermittlungsanlage (VA) steuerungstechnisch wie ein Anschlußorgan mit besonderen Merkmalen behandelt wird.

4. Verfahren nach Anspruch 1,
dadurch gekennzeichnet,
daß in den Signalisierungskanälen (SK1, SK2) Übertragungsprotokolle benutzt werden können, wie sie für das Dienste integrierende Digitalnetz ISDN verwendet werden.

## Claims

1. Method for data transmission in communication exchanges, terminals operated in analog mode being used for data input, which terminals can enter into connection with data terminal equipment via the exchange when corresponding dialling information is emitted, it being possible for a data exchange to take place in both directions, and decentralized and central control devices being provided, having the following steps:
- the information emitted by an analog terminal (EG) and received by a responsible decentralized controller (IVG1) is passed via an existing bus line system (BUS), within a signalling channel (SK1) formed for this purpose, to centrally arranged processing equipment (VEE), provided for certain tasks, a special connecting state thus being produced,
- the processing equipment (VEE) checks the data coming from the analog terminal (EG) and only passes this data on to data terminal equipment (DEE) if a data record coming from the analog terminal (EG) has been recognized as complete,
- a continuing signalling channel (SK2) to data terminal equipment (DEE) is formed via a decentralized controller (IVGn), responsible for the data terminal equipment, and a subscriber line circuit (TA),
- from the processing equipment (VEE) information on whether the data transmission has taken place properly or not is emitted to the analog terminal (EG).

2. Method according to Claim 1, characterized in that a connection for the transmission of voice and/or sound signals to an analog terminal (EG) is set up by the processing equipment (VEE), since the said terminal does not contain any receiving and display equipment for the representation of digital information.

3. Method according to Claim 1, characterized in that the processing equipment (VEE) is handled within the exchange (VA) in controlled technology terms like an access unit with special features.

4. Method according to Claim 1, characterized in that transmission protocols such as are used for the integrated services digital network ISDN can be used in the signalling channels (SK1, SK2).

## Revendications

1. Procédé de transmission de données dans des installations servant à transmettre des communications, des appareils terminaux, qui fonctionnent de manière analogique, étant utilisés pour l'entrée des données, appareils qui lors de la délivrance d'informations par numérotation correspondantes peuvent entrer en liaison par l'intermédiaire de l'installation de transmission avec un dispositif terminal de saisie de données, un échange de données pouvant avoir lieu dans les deux sens et des dispositifs de commande indépendants de l'ordinateur central et centraux étant prévus,
caractérisé par les séquences suivantes :
- les informations délivrées par un appareil terminal analogique (EG) et reçues par une commande indépendante de l'ordinateur central appropriée (IVG1) sont envoyées par l'intermédiaire d'un système de bus existant (BUS) dans le cadre d'un canal de signalisation formé pour cela (SK1) à un dispositif de retraitement (VEE) disposé de façon centrale, prévu pour des missions déterminées, un état particulier de liaison se produisant,
- le dispositif de retraitement (VEE) contrôle les données provenant de l'appareil terminal analogique (EG) et ne retransmet alors ces données qu'à un dispositif terminal de saisie de données (DEE), quand un ensemble de données provenant de l'appareil terminal analogique (EG) a été reconnu comme complet,
- on forme un canal de signalisation (SK2), qui se poursuit vers un dispositif terminal de saisie de données (DEE) au moyen d'une commande (IVGn), indépendante de l'ordinateur central, appropriée pour le dispositif terminal de saisie de données et d'un circuit de raccordement d'abonné (TA),
- depuis le dispositif de retraitement (VEE) on délivre à l'appareil terminal analogique (EG) une information permettant de savoir si la transmission de données a eu lieu convenablement ou pas.

2. Procédé selon la revendication 1,
caractérisé en ce que
l'on établit à partir du dispositif de retraitement (VEE) une liaison servant à transmettre des signaux de conversation et/ou de tonalité vers un appareil terminal analogique (EG), car celle-ci ne contient pas de dispositifs de réception et d'indication pour la représentation d'une information numérique.

3. Procédé selon la revendication 1,
caractérisé en ce que
le dispositif de retraitement (VEE) est traité à l'intérieur de l'installation de transmission (VA) selon les techniques de commande comme un organe de raccordement avec des caractéristiques particulières.

4. Procédé selon la revendication 1,
caractérisé en ce que
l'on peut dans les canaux de signalisation (SK1, SK2) utiliser des protocoles de transmission tels que ceux qui sont utilisés pour le réseau numérique à intégration de services ISDN.
